(19) Europäisches Patentamt
European Patent Office
Office européen des brevets

(11) **EP 0 982 620 A2**

(12) **EUROPEAN PATENT APPLICATION**

(43) Date of publication:
**01.03.2000 Bulletin 2000/09**

(51) Int. Cl.7: **G02F 1/09**, G02B 6/26,
G02B 27/28, H04B 10/17

(21) Application number: **99116130.8**

(22) Date of filing: **19.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.08.1998 JP 23306998**

(71) Applicant: **FUJITSU LIMITED**
**Kawasaki-shi, Kanagawa 211-8588 (JP)**

(72) Inventor: **Terahara, Takafumi**
**Nakahara-ku, Kawasaki-shi, Kanagawa 211 (JP)**

(74) Representative: **HOFFMANN - EITLE**
**Patent- und Rechtsanwälte**
**Arabellastrasse 4**
**81925 München (DE)**

(54) **Optical device usable as optical isolator, and optical amplifier and system including the optical device**

(57) The present invention relates to an optical device usable as an optical isolator which has wavelength selectivity. The optical device includes two polarizers each having a transmission axis determining the polarization axis of polarized light passing therethrough, and a birefringent element and a Faraday rotator both provided between the polarizers. The thickness of the birefringent element BE is set so that it functions as a full-wave plate for a first wavelength and functions as a half-wave plate for a second wavelength different from the first wavelength. The Faraday rotator gives a Faraday rotation angle of $\pi/4$. The angle formed between the transmission axis of one of the polarizers and the transmission axis of the other polarizer is set to $\pi/4$. The angle formed between the transmission axis of one of the polarizers and the optic axis of the birefringent element is set to $\pi/4$.

# F I G. 3

**Description**

**BACKGROUND OF THE INVENTION**

Field of the Invention

The present invention relates to an optical device usable as an optical isolator, and also to an optical amplifier and system including the optical device.

Description of the Related Art

In recent years, a manufacturing technique and using technique for a low-loss (e.g., 0.2 dB/km) optical fiber have been established, and an optical fiber communication system using the optical fiber as a transmission line has been put to practical use. Further, to compensate for losses in the optical fiber and thereby allow long-haul transmission, the use of an optical amplifier for amplifying signal light has been proposed or put to practical use.

An optical amplifier known in the art includes an optical amplifying medium to which signal light to be amplified is supplied and means for pumping the optical amplifying medium so that the optical amplifying medium provides a gain band including the wavelength of the signal light. For example, an erbium doped fiber amplifier (EDFA) includes an erbium doped fiber (EDF) as the optical amplifying medium and a pumping source for supplying pump light having a predetermined wavelength to the EDF. By preliminarily setting the wavelength of the pump light within a 0.98 μm band or a 1.48 μm band, a gain band including a wavelength of 1.55 μm can be obtained. Further, another type optical amplifier having a semiconductor chip as the optical amplifying medium is also known. In this case, the pumping is performed by injecting an electric current into the semiconductor chip.

In this kind of optical amplifier, an optical isolator is used to prevent undesired oscillation due to formation of an optical resonator structure including an optical amplifying medium. Further, an optical isolator is used also to suppress reflective return light causing an unstable operation of a laser diode used as a signal light source or a pumping source.

The optical isolator is an optical device for nonreversibly coupling a first port and a second port each provided by an optical fiber end, for example. For example, a loss by the optical isolator in a direction from the first port toward the second port is low, and a loss by the optical isolator in a direction from the second port toward the first port is very high.

If the optical isolator has wavelength selectivity, its utility value would be high. For example, if the optical isolator performs reverse operations at at least two different wavelengths, this optical isolator would be able to serve both as an optical isolator for preventing the return of reflected light to a pumping source and as an optical isolator for preventing undesired oscillation in an optical amplifier. As a result, the optical amplifier would be simplified in configuration.

As a technique for increasing a transmission capacity by a single optical fiber, wavelength division multiplexing (WDM) is known. In a system adopting WDM, a plurality of optical carriers having different wavelengths are used. The plural optical carriers are individually modulated to thereby obtain a plurality of optical signals, which are wavelength division multiplexed by an optical multiplexer to obtain WDM signal light, which is output to an optical fiber transmission line. On the receiving side, the WDM signal light received is separated into individual optical signals by an optical demultiplexer, and transmitted data is reproduced according to each optical signal. Accordingly, by applying WDM, the transmission capacity in a single optical fiber can be increased according to the number of WDM channels.

In a system adopting WDM, various optical devices having wavelength selectivity have been increasingly demanded. By designing an optical isolator so that it has wavelength selectivity, there occurs a possibility that a device or system having a new function can be provided. For example, although an optical amplifier including an optical isolator having no wavelength selectivity cannot be applied to bidirectional transmission using a single optical fiber, an optical isolator having wavelength selectivity can be applied to bidirectional transmission because it can perform reverse operations for two optical signals having different wavelengths. Further, an optical isolator having wavelength selectivity may enable effective combination of WDM and bidirectional transmission.

**SUMMARY OF THE INVENTION**

It is therefore an object of the present invention to provide an optical device usable as an optical isolator having wavelength selectivity. Specifically, it is an object of the present invention to provide an optical device usable as an optical isolator which can perform reverse operations at at least two different wavelengths.

It is another object of the present invention to provide an optical amplifier and system including such an optical device.

In accordance with a first aspect of the present invention, there is provided an optical device for optically coupling a first port and a second port. This optical device comprises first and second polarization units, a birefringent element, and a Faraday rotator. The first polarization unit couples the first port to a first optical path related to a first polarized light component having a first polarization plane and to a second optical path related to a second polarized light component having a second polarization plane perpendicular to the first polarization plane. The second polarization unit couples the second port to the first and second optical paths. The birefringent element is provided between the first and second polarization units. The birefringent element functions as a full-wave plate for each of the first and second polarized light components at a first wavelength and as a half-wave plate for each of the first and second polarized light components at a second wavelength different from the first wavelength. The Faraday rotator is provided between the first and second polarization units. The Faraday rotator gives a Faraday rotation angle of $(2n + 1)\pi/4$ (n is an integer) to each of the first and second polarized light components.

With this configuration, the birefringent element used in the optical device functions either as the full-wave plate or as the half-wave plate according to wavelength, so that it is possible to provide an optical isolator having wavelength selectivity. For example, the birefringent element functioning as the full-wave plate does not rotate the polarization plane of light having the first wavelength, whereas the birefringent element functioning as the half-wave plate rotates $\pi/2$ the polarization plane of light having the second wavelength different from the first wavelength. Assuming that the direction of rotation of the polarization plane in the birefringent element and the direction of rotation of the polarization plane in the Faraday rotator are the same as each other as viewed in the direction from the first port toward the second port, the direction of rotation of the polarization plane in the birefringent element and the direction of rotation of the polarization plane in the Faraday rotator are opposite to each other as viewed in the direction from the second port toward the first port. Accordingly, by the combination of the birefringent element and the Faraday rotator as mentioned above, it is possible to provide an optical isolator which can perform reverse operations at the first and second wavelengths. Furthermore, by the combination of the first and second polarization units, the transmittance of the optical isolator in the forward direction can be made independent of a polarization state of an input beam.

For example, a beam having the first wavelength from the first port follows the first and second optical paths and is supplied entirely in principle to the second port; a beam having the first wavelength from the second port is deviated from the first and second optical paths and not supplied to the first port; a beam having the second wavelength from the second port follows the first and second optical paths and is supplied entirely in principle to the first port; and a beam having the second wavelength from the first port is deviated from the first and second optical paths and not supplied to the second port.

In other words, this optical device passes light having the first wavelength and blocks light having the second wavelength in the direction from the first port toward the second port, whereas passes light having the second wavelength and blocks light having the first wavelength in the direction from the second port toward the first port.

In accordance with a second aspect of the present invention, there is provided an optical device comprising first and second polarizers, a birefringent element provided between the first and second polarizers, and a Faraday rotator provided between the first and second polarizers. Each of the first and second polarizers has a transmission axis determining a polarization axis of polarized light passing therethrough. The birefringent element has an optic axis determining a phase difference between two orthogonal polarized light components of polarized light passing therethrough. The Faraday rotator gives a Faraday rotation angle of $(2n + 1)\pi/4$ (n is an integer) to polarized light passing therethrough. An angle of $\pi/4$ is formed between the transmission axis of the first polarizer and the transmission axis of the second polarizer. An angle of $\pi/4$ is formed between the transmission axis of the first polarizer and the optic axis of the birefringent element.

In accordance with a third aspect of the present invention, there is provided an optical amplifier comprising an optical device usable as an optical isolator having wavelength selectivity. This optical device may be provided by the optical device according to the first or second aspect of the present invention, for example. The optical amplifier further comprises an optical amplifying medium, a WDM coupler, and a pumping source. The optical device has first and second ports. The optical device passes light having a first wavelength and blocks light having a second wavelength different from the first wavelength in a direction from the first port toward the second port, whereas passes light having the second wavelength and blocks light having the first wavelength in a direction from the second port toward the first port. The optical amplifying medium has a first end and a second end. The first end is supplied with signal light having the first wavelength, and the second end is optically connected to the first port. The WDM coupler has third, fourth, and fifth ports. The third port is optically connected to the second port. The third and fourth ports are coupled by the first wavelength, and the third and fifth ports are coupled by the second wavelength. The pumping source is optically connected to the fifth port and outputs pump light having a wavelength determined so that the optical amplifying medium provides a gain band including the first wavelength. The wavelength of the pump light is substantially equal to the second wavelength.

In accordance with a fourth aspect of the present invention, there is provided an optical amplifier comprising an optical device usable as an optical isolator having wavelength selectivity. This optical device may be provided by the optical device according to the first or second aspect of the present invention, for example. The optical amplifier further comprises first and second optical amplifying media, a WDM coupler, and a pumping source. The optical device has first and second ports. The optical device passes light having a first wavelength and blocks light having a second wavelength different from the first wavelength in a direction from the first port toward the second port, whereas passes light having the second wavelength and blocks light having the first wavelength in a direction from the second port toward the first port. The first optical amplifying medium has a first end and a second end. The first end is supplied with signal light having the first wavelength, and the second end is optically connected to the first port. The second optical amplifying medium has a third end and a fourth end. The third end is optically connected to the second port. The WDM coupler has third, fourth, and fifth ports. The third port is optically connected to the fourth end. The third and fourth ports are coupled by the first wavelength, and the third and fifth ports are coupled by the second wavelength. The pumping source is optically connected to the fifth port and outputs pump light having a wavelength determined so that each of the first and second optical amplifying media provides a gain band including the first wavelength. The wavelength of the pump light is substantially equal to the second wavelength.

In accordance with a fifth aspect of the present invention, there is provided an optical amplifier comprising an optical device usable as an optical isolator having wavelength selectivity. This optical device may be provided by the optical device according to the first or second aspect of the present invention, for example. The optical amplifier further comprises an optical amplifying medium and means for pumping the optical amplifying medium. The optical amplifying medium has a first end and a second end. The optical device has first and second ports. The second port is operatively connected to the first end. The optical device passes light having a first wavelength and blocks light having a second wavelength different from the first wavelength in a direction from the first port toward the second port, whereas passes light having the second wavelength and blocks light having the first wavelength in a direction from the second port toward the first port. The pumping means pumps the optical amplifying medium so that the optical amplifying medium provides a gain band including the first and second wavelengths.

In accordance with a sixth aspect of the present invention, there is provided a system comprising an optical fiber transmission line and at least one optical repeater arranged along the optical fiber transmission line. Each repeater may be provided by the optical amplifier according to the fifth aspect of the present invention, for example.

The above and other objects, features and advantages of the present invention and the manner of realizing them will become more apparent, and the invention itself will best be understood from a study of the following description and appended claims with reference to the attached drawings showing some preferred embodiments of the invention.

## BRIEF DESCRIPTION OF THE DRAWINGS

FIG. 1 is a schematic illustration of a conventional birefringent filter;
FIG. 2 is a schematic illustration of a conventional optical isolator;
FIG. 3 is a schematic illustration showing a basic configuration of the optical isolator according to the present invention;
FIGS. 4A and 4B are illustrations of the principle of operation of the optical isolator shown in FIG. 3;
FIG. 5 is a graph of 1/λ approximated by a linear function;
FIGS. 6A and 6B are graphs showing an operating characteristic of the optical isolator shown in FIG. 3;
FIGS. 7A and 7B are illustrations of a positional relation among the members of the optical isolator shown in FIG. 3;
FIG. 8 is a schematic illustration showing another basic configuration of the optical isolator according to the present invention.
FIGS. 9A to 9E are schematic illustrations showing a first preferred embodiment of the optical isolator shown in FIG. 8;
FIGS. 10A to 10E are schematic illustrations showing a second preferred embodiment of the optical isolator shown in FIG. 8;
FIGS. 11A to 11E are schematic illustrations showing a third preferred embodiment of the optical isolator shown in FIG. 8;
FIGS. 12A and 12E are schematic illustrations showing a fourth preferred embodiment of the optical isolator shown in FIG. 8;
FIG. 13 is a schematic illustration of a conventional optical amplifier including an optical isolator;
FIG. 14 is a schematic illustration showing an improvement of the optical amplifier shown in FIG. 13;
FIG. 15 is a schematic illustration showing a first preferred embodiment of the optical amplifier according to the present invention;
FIG. 16 is a schematic illustration showing a second preferred embodiment of the optical amplifier according to the present invention;

FIG. 17 is a schematic illustration showing a third preferred embodiment of the optical amplifier according to the present invention;

FIG. 18 is a schematic illustration showing a fourth preferred embodiment of the optical amplifier according to the present invention;

FIG. 19 is a schematic illustration showing a preferred embodiment of the system according to the present invention; and

FIG. 20 is a graph showing an example of the spectrum of signal light in the system shown in FIG. 19.

## DETAILED DESCRIPTION OF THE PREFERRED EMBODIMENTS

Some preferred embodiments of the present invention will now be described in detail with reference to the attached drawings. Throughout the drawings substantially the same parts are denoted by the same reference numerals.

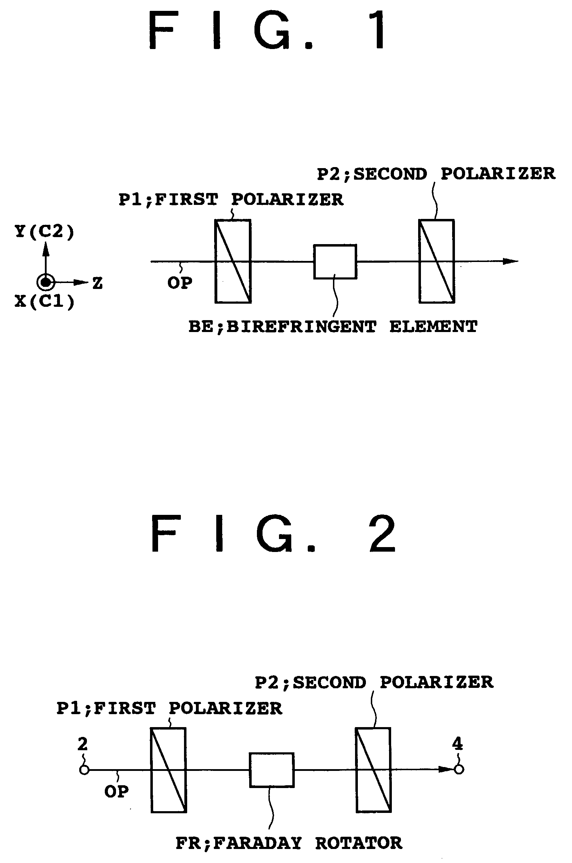

A birefringent filter will first be described with reference to FIG. 1 because it is considered useful in understanding the configuration and operation of the optical device according to the present invention. The birefringent filter shown in FIG. 1 is configured by arranging a first polarizer P1, a birefringent element BE, and a second polarizer P2 in this order along an optical path OP of transmitted light. An orthogonal three-dimensional coordinate system (X, Y, Z) having a Z axis parallel to the optical path OP is adopted herein. It is assumed that the X axis and the Y axis are parallel to the optic axes (C1 axis and C2 axis) of the birefringent element BE, respectively, and the angle formed between the transmission axis of the first polarizer P1 and the Y axis is 45°. The angle formed between the transmission axis of the second polarizer P2 and the Y axis is arbitrary.

Generally, "the transmission axis of a polarizer" points in a direction of vibration of linearly polarized light transmitted through the polarizer, and it is more generally defined as an axis determining the polarization axis of polarized light transmitted through the polarizer.

When linearly polarized light transmitted through the first polarizer P1 enters the birefringent element BE, the linearly polarized light is separated into a component having a polarization plane parallel to the C1 axis and a component having a polarization plane parallel to the C2 axis, and these two components propagate in the birefringent element BE. When output from the birefringent element BE, these two components are combined at a phase difference determined according to wavelength. In the case that the thickness of the birefringent element BE is sufficiently larger than the wavelength of incident light, the polarization state of the light combined at the output of the birefringent element BE differs according to wavelength. That is, the combined light can be linearly polarized light or circularly or elliptically polarized light according to wavelength.

The transmittance of the second polarizer P2 depends on the polarization state of light incident on the second polarizer P2, and therefore differs according to wavelength. For example, assuming that the transmission axis of the second polarizer P2 is fixed so as to be parallel to linearly polarized light having a certain wavelength, the transmittance of the second polarizer P2 to the light of this wavelength is 100 % in principle. At another wavelength, the transmittance of the second polarizer P2 to linearly polarized light perpendicular to the transmission axis of the second polarizer P2 is 0 % in principle. Further, the transmittance of the second polarizer P2 to circularly polarized light having another wavelength is 50 % in principle, and the transmittance of the second polarizer P2 to elliptically polarized light having another wavelength varies according to the ellipticity of the elliptically polarized light. Thus, the transmittance of this birefringent filter varies depending upon the wavelength of incident light. More specifically, in the case that the thickness of the birefringent element BE in the Z-axis direction is sufficiently larger than the wavelength of incident light, the transmittance (power transmittance) of the birefringent filter shown in FIG. 1 substantially periodically changes with changes in the wavelength of incident light.

FIG. 2 is a schematic illustration of a conventional optical isolator. This optical isolator is used so as to optically couple a first port 2 and a second port 4 through an optical path OP. This optical isolator differs from the birefringent filter shown in FIG. 1 in that a Faraday rotator FR is provided in place of the birefringent element BE and in that the transmission axis of each of the polarizers P1 and P2 is changed in direction.

The Faraday rotator FR gives a Faraday rotation angle of $\pi/4$ (45°), more generally, a Faraday rotation angle of $(2n + 1)\pi/4$ (n is an integer), to polarized light passing therethrough. The transmission axis of the second polarizer P2 points in a direction determined by $\pi/4$ rotating the transmission axis of the first polarizer P1 in the direction of Faraday rotation by the Faraday rotator FR as viewed from the port 2 toward the port 4.

For example, assuming that the direction of Faraday rotation by the Faraday rotator FR as viewed from the port 2 toward the port 4 is clockwise, the polarization plane of linearly polarized light passed through the first polarizer P1 is rotated clockwise by $\pi/4$ when passing the Faraday rotator FR, so that the linearly polarized light passed through the Faraday rotator FR is passed through the second polarizer P2 at a transmittance of 100% in principle. Accordingly, the loss by this optical isolator is greatly low in the direction from the port 2 toward the port 4.

However, the loss by this optical isolator is greatly high in the opposite direction from the port 4 toward the port 2, because the direction of Faraday rotation by the Faraday rotator FR as viewed from the port 4 toward the port 2 is counterclockwise.

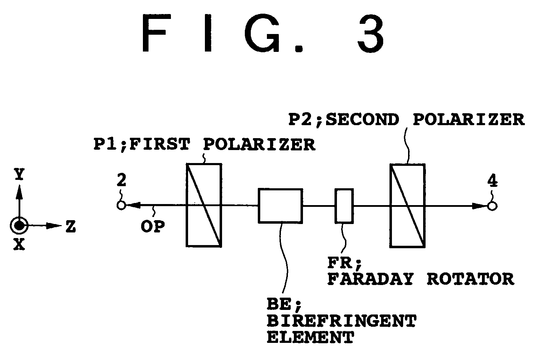

Referring to FIG. 3, there is shown a basic configuration of the optical isolator according to the present invention. This optical isolator can be used so as to optically couple a first port 2 and a second port 4 through an optical path OP. A first polarizer P1, a birefringent element BE, a Faraday rotator FR, and a second polarizer P2 are arranged in this order along the optical path OP in the direction from the port 2 toward the port 4. The birefringent element BE and the Faraday rotator FR may be reversed in order in the direction from the port 2 toward the port 4.

Although the optical isolator shown in FIG. 3 may be considered similar to the birefringent filter shown in FIG. 1 and the optical isolator shown in FIG. 2 from the viewpoint of arrangement of the members, the configuration of the optical isolator shown in FIG. 3 can provide an effect or advantage unexpectable from a simple combination of those shown in FIGS. 1 and 2. That is, the optical isolator shown in FIG. 3 has wavelength selectivity, and more specifically, it performs reverse operations at at least two different wavelengths. The operating principle will now be described in detail.

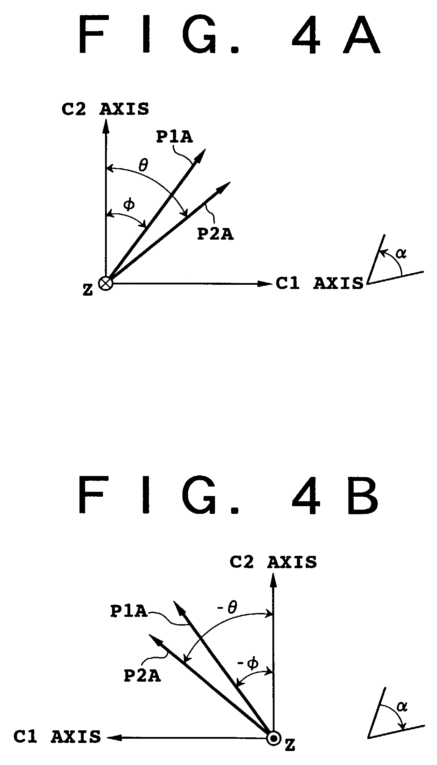

FIGS. 4A and 4B illustrate the principle of operation of the optical isolator shown in FIG. 3. It is now assumed that in the optical isolator shown in FIG. 3 the transmission axis P1A of the first polarizer P1, the optic axes (C1 axis and C2 axis) of the birefringent element BE, and the transmission axis P2A of the second polarizer P2 are in positional relation to each other as shown in FIG. 4A. That is, let $\phi$ denote the angle formed between the transmission axis P1A and the C2 axis and $\theta$ denote the angle formed between the transmission axis P2A and the C2 axis.

There will now be considered the case that the Faraday rotation angle $\alpha$ given by the Faraday rotator FR is zero, i.e., the case equivalent to the birefringent filter shown in FIG. 1.

When linearly polarized light $\sin(\omega t)$ having a polarization plane parallel to the transmission axis P1A enters the birefringent element BE from the first polarizer P1, a component E1 of transmitted light through the birefringent element BE parallel to the C1 axis and a component E2 of the transmitted light parallel to the C2 axis can be expressed as follows:

$$E1 = \sin\phi\sin(\omega t + \varepsilon 1)$$

$$E2 = \cos\phi\sin(\omega t + \varepsilon 2)$$

Where $\varepsilon 1$ and $\varepsilon 2$ are the retardations of the components E1 and E2, respectively. The amplitude of light emerging from the second polarizer P2 is given as follows:

$$E1\sin\theta + E2\cos\theta$$
$$= \sin\phi\sin\theta\sin(\omega t + \varepsilon 1) + \cos\phi\cos\theta\sin(\omega t + \varepsilon 2)$$
$$= (\sin\phi\sin\theta\cos\varepsilon 1 + \cos\phi\cos\theta\cos\varepsilon 2)\sin\omega t + (\sin\phi\sin\theta\sin\varepsilon 1 + \cos\phi\cos\theta\sin\varepsilon 2)\cos\omega t$$

Accordingly, the intensity I of transmitted light is given as follows:

$$I = \cos^2(\phi + \theta) + \sin(2\phi)\sin(2\theta)\cos^2((\varepsilon 1 - \varepsilon 2)/2)$$

Letting d denote the thickness of the birefringent element BE, $\mu$ denote the refractive index difference between an ordinary ray and an extraordinary ray in the birefringent element BE, and $\lambda$ denote the wavelength, the following equation holds.

$$(\varepsilon 1 - \varepsilon 2)/2 = \pi\mu d/\lambda$$

Accordingly, the intensity I of transmitted light can be expressed as a function $I(\lambda)$ of wavelength $\lambda$ to give Eq. (1).

$$I(\lambda) = \cos^2(\phi + \theta) + \sin(2\phi)\sin(2\theta)\cos^2(\pi\mu d/\lambda) \tag{1}$$

As understood from Eq. (1), the transmitted light intensity has wavelength dependence and periodically changes with wavelength. If the wavelength band is higher than an actually operating wavelength band, $1/\lambda$ can be approximated by a linear function as follows:

$$1/\lambda = a\lambda + b$$

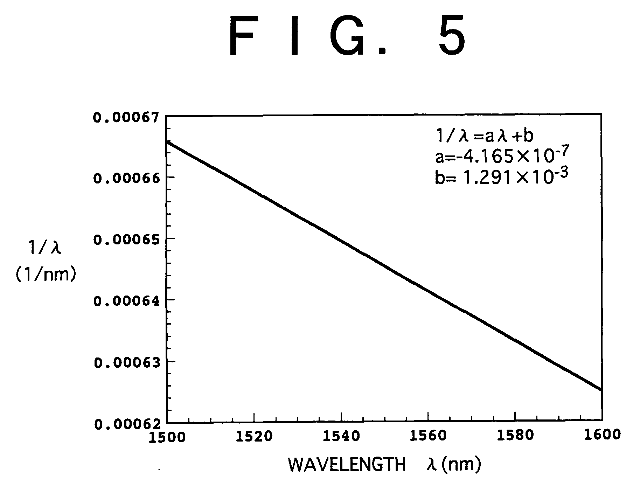

If the wavelength band is set to a range of 1500 nm to 1600 nm as shown in FIG. 5, for example, $a = -4.165 \times 10^{-7}$ (1/nm$^2$) and $b = 1.291 \times 10^{-3}$ (1/nm).

Neglecting b and considering only a relative wavelength, Eq. (1') is given.

$$I(\lambda) = \cos^2(\phi + \theta)\,\sin(2\phi)\sin(2\theta)\cos^2(\pi\lambda/\text{FSR}) \qquad (1)$$

where FSR (Free Spectral Range) represents a wavelength period in a wavelength characteristic of transmittance, and it is expressed as follows:

$$\text{FSR} = 1/a\mu d \qquad (2)$$

Accordingly, it is understood that a required FSR can be obtained by adjusting the thickness d of the birefringent element BE provided that the refractive index difference $\mu$ determined by the material of the birefringent element BE is constant.

The angle $\theta$ is an angle formed between the transmission axis P2A of the second polarizer P2 and the C2 axis, and it can be said that the angle $\theta$ is an angle formed between the polarization axis of light incident on the second polarizer P2 and the transmission axis P2A of the second polarizer P2. Accordingly, in the case that the Faraday rotation angle given by the Faraday rotator FR takes a certain angle $\alpha$, the intensity If($\lambda$) of transmitted light in the forward direction from the first port 2 toward the second port 4 can be expressed by Eq. (3) obtained by substituting ($\theta + \alpha$) for $\theta$ in Eq. (1).

$$\text{If}(\lambda) = \cos^2(\phi + \theta + \alpha) + \sin(2\phi)\sin(2(\theta + \alpha))\,\cos^2(\pi\mu d/\lambda) \qquad (3)$$

In considering the backward direction from the second port 4 toward the first port 2, the coordinates are reversed as shown in FIG. 4B, and $\phi$ and $\theta$ are replaced by ($-\phi$) and ($-\theta$), respectively. The direction of Faraday rotation by the Faraday rotator FR in the backward direction is spatially the same as that in the forward direction, so that the sign of Faraday rotation is unchanged. Accordingly, the intensity Ib($\lambda$) of transmitted light in the backward direction can be expressed by Eq. (4).

$$\begin{aligned}\text{Ib}(\lambda)\\ =\cos^2(-\phi - \theta + \alpha) + \sin(-2\phi)\sin(2(-\theta + \alpha),\ \cos^2(\pi\mu d/\lambda)\end{aligned} \qquad (4)$$

In the case that $\phi = \pi/4$, $\theta = \pi/2$, and $\alpha = -\pi/4$, for example, Eqs. (3) and (4) become as follows:

$$\begin{aligned}\text{If}(\lambda) &= \cos^2(\pi/4 + \pi/2 - \pi/4) + \sin(2\pi/4)\sin(2(\pi/2 - \pi/4))\cos^2(\pi\mu d/\lambda)\\ &= \cos^2(\pi/2) + \sin(\pi/2)\sin(\pi/2)\cos^2(\pi\mu d/\lambda)\\ &= \cos^2(\pi\mu d/\lambda)\end{aligned} \qquad (5)$$

$$\begin{aligned}\text{Ib}(\lambda) &= \cos^2(-\pi/4 - \pi/2 - \pi/4) + \sin(-2\pi/4)\sin(2(-\pi/2 - \pi/4))\cos^2(\pi\mu d/\lambda)\\ &= \cos^2(-\pi) + \sin(-\pi/2)\sin(-3\pi/2)\cos^2(\pi/\mu d/\lambda)\\ &= 1 - \cos^2(\pi\mu d/\lambda)\\ &= \sin^2(\pi\mu d/\lambda)\end{aligned} \qquad (6)$$

Further, when d = 0, this case is equivalent to the case that the birefringent element BE is absent. That is, the following characteristic of the conventional optical isolator shown in FIG. 2 is obtained.

$$\text{If}(\lambda) = 1$$

$$\text{Ib}(\lambda) = 0$$

Further, in the case that $\phi = \pi/4$, $\theta = \pi/2$, and $\alpha = \pi/4$, Eqs. (3) and (4) become as follows:

$$\text{If}(\lambda) = \sin^2(\pi\mu d/\lambda)$$

$$\text{Ib}(\lambda) = \cos^2(\pi\mu d/\lambda)$$

Thus, it is understood that If($\lambda$) and Ib($\lambda$) are exchanged according to the direction of Faraday rotation by the Faraday rotator FR.

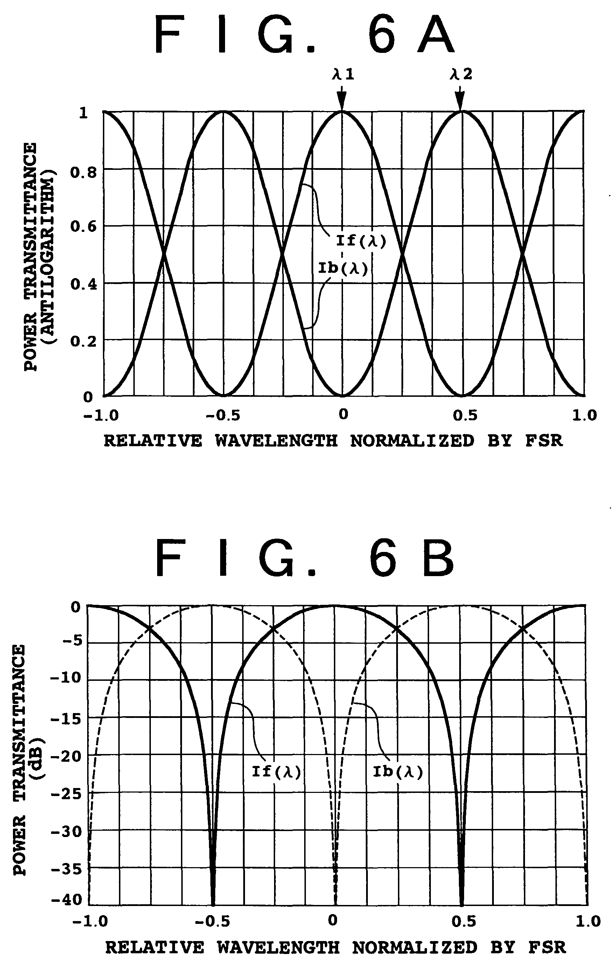

FIGS. 6A and 6B are graphs showing an operating characteristic of the optical isolator shown in FIG. 3. In FIG. 6A, the vertical axis represents power transmittance expressed in antilogarithm, and the horizontal axis represents relative wavelength normalized by FSR. In FIG. 6B, the vertical axis represents power transmittance expressed in dB, and the horizontal axis represents relative wavelength normalized by FSR.

As shown in FIG. 6A, at a wavelength $\lambda 1$ corresponding to a value 0 for the relative wavelength, $If(\lambda)$ is 1 and $Ib(\lambda)$ is 0, thus obtaining a function of the optical isolator to the light having the wavelength $\lambda 1$ such that the loss in the forward direction from the port 2 toward the port 4 is greatly low and the loss in the backward direction from the port 4 toward the port 2 is greatly high. In contrast, at another wavelength $\lambda 2$ corresponding to a value 0.5 for the relative wavelength, $If(\lambda) = 0$ and $If(\lambda) = 1$, thus obtaining another function of the optical isolator to the light having the wavelength $\lambda 2$ such that the loss in the forward direction is greatly high and the loss in the backward direction is greatly low. In this manner, the optical isolator shown in FIG. 3 performs reverse operations at at least two different wavelengths.

In viewing the present invention from another aspect, the thickness of the birefringent element BE is set so that it functions as a full-wave plate for one of the wavelengths $\lambda 1$ and $\lambda 2$ and functions as a half-wave plate for the other. Specifically, a birefringent plate having a thickness sufficiently larger than an operating wavelength is used as the birefringent element BE. More specifically, a birefringent plate capable of giving a phase difference corresponding to a length 20 to 100 times an operating wavelength or having a thickness corresponding to this length is adopted as the birefringent element BE.

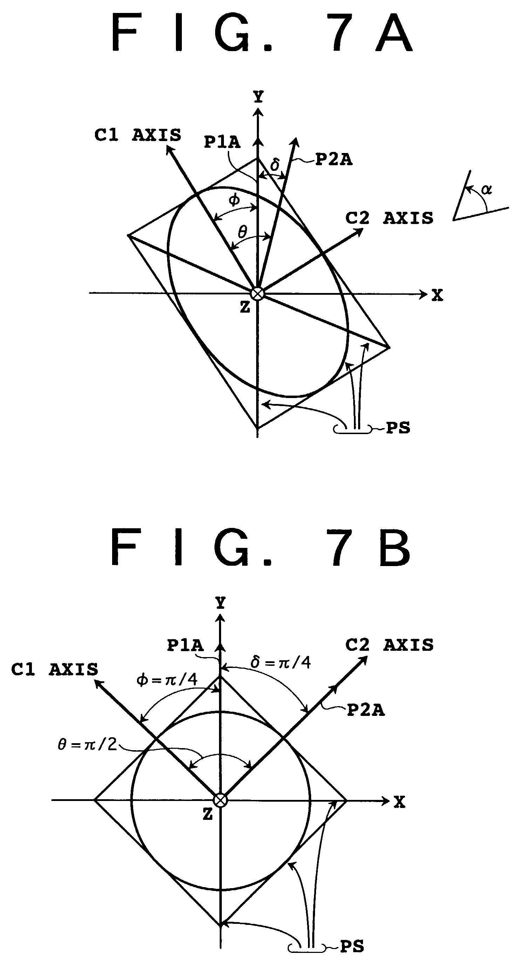

FIGS. 7A and 7B show a positional relation among the members of the optical isolator shown in FIG. 3. It is assumed that in the orthogonal three-dimensional coordinate system (X, Y, Z) the Z axis is parallel to the optical path OP, and the Y axis is parallel to the transmission axis P1A of the first polarizer P1. Further, $\phi$, $\theta$, and $\delta$ will be defined newly or more precisely as shown in FIG. 7A. That is, $\phi$ is an angle formed between the C1 axis of the birefringent element BE and the transmission axis P1A (Y axis) of the first polarizer P1; $\theta$ is an angle formed between the C1 axis of the birefringent element BE and the transmission axis P2A of the second polarizer P2; and $\delta$ is an angle formed between the transmission axis P1A (Y axis) of the first polarizer P1 and the transmission axis P2A of the second polarizer P2. Accordingly, $\theta = \phi + \delta$. Further, the Faraday rotation angle $\alpha$ given by the Faraday rotator FR takes a positive sign when rotating counterclockwise from the X axis toward the Y axis.

In FIGS. 7A and 7B, the group of an ellipse (including a circle) and straight lines represented by reference symbol PS represents wavelength dependence of a polarization state at the output of the birefringent element BE in the case of $\alpha = 0$.

According to an aspect of the present invention, each angle is specified as shown in FIG. 7B. For example, $\phi = \pi/4$, $\theta = \pi/2$, $\delta = \pi/4$, and $\alpha = \pi/4$ (or $-\pi/4$). Accordingly, an optical isolator having wavelength selectivity can be provided, and this optical isolator performs reverse operations at at least two different wavelengths.

In the optical isolator shown in FIG. 3, the power of output light varies depending upon the polarization state of input light, because the polarizers P1 and P2 are used. According to an aspect of the present invention, such polarization dependence can also be eliminated. This will now be described more specifically.

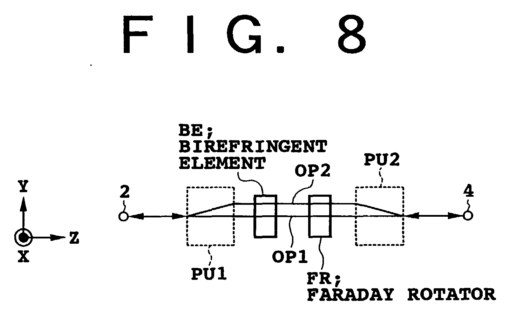

FIG. 8 is a schematic illustration showing another basic configuration of the optical isolator according to the present invention. This optical isolator can be used to optically couple a first port 2 and a second port 4. This optical isolator includes a first polarization unit PU1, a second polarization unit PU2, a birefringent element BE provided between the first and second polarization units PU1 and PU2, and a Faraday rotator FR provided between the first and second polarization units PU1 and PU2. Although the birefringent element BE and the Faraday rotator FR are arranged in this order in the direction from the first port 2 toward the second port 4 as shown, the birefringent element BE and the Faraday rotator FR may be reversed in order in the direction from the first port 2 toward the second port 4.

The first polarization unit PU1 couples the first port 2 to a first optical path OP1 related to a first polarized light component having a first polarization plane and to a second optical path OP2 related to a second polarized light component having a second polarization plane perpendicular to the first polarization plane.

The second polarization unit PU2 couples the second port 4 to the first optical path OP1 and the second optical path OP2.

The birefringent element BE functions as a full-wave plate for each of the first and second polarized light components at a first wavelength, and functions as a half-wave plate for each of the first and second polarized light components at a second wavelength different from the first wavelength. More specifically, the birefringent element BE functioning as the full-wave plate does not rotate the first and second polarization planes, and the birefringent element BE functioning as the half-wave plate rotates the first and second polarization planes by $\pi/2$.

The Faraday rotator FR gives a Faraday rotation angle of $(2n + 1)\pi/4$ (n is an integer) to each of the first and second polarized light components.

The optical isolator shown in FIG. 8 operates in the following manner, for example, as supported by various preferred embodiments to be hereinafter described.

A beam having the first wavelength from the first port 2 follows the optical paths OP1 and OP2 and is supplied entirely in principle to the second port 4; a beam having the first wavelength from the second port 4 is deviated from the optical paths OP1 and OP2 and not supplied to the first port 2; a beam having the second wavelength from the second port 4 follows the optical paths OP1 and OP2 and is supplied entirely in principle to the first port 2; and a beam having the second wavelength from the first port 2 is deviated from the optical paths OP1 and OP2 and not supplied to the second port 4. In this manner, the optical isolator shown in FIG. 8 has wavelength selectivity and performs reverse operations at at least two different wavelengths. Furthermore, the power of output light is not effected by the polarization state of input light, so that a polarization-independent optical isolator can be provided.

FIGS. 9A to 9E are schematic illustrations showing a first preferred embodiment of the optical isolator shown in FIG. 8. The configuration of this optical isolator according to the first preferred embodiment will now be described with reference to FIG. 9A.

The first port 2 and the second port 4 are provided by optical fibers 6 and 8, respectively. A lens 10 is provided between the optical fiber 6 and the polarization unit PU1, and a lens 12 is provided between the polarization unit PU2 and the optical fiber 8.

The polarization unit PU1 includes a plane plate 14 formed of a birefringent material such as rutile. The polarization unit PU2 includes plane plates 16 and 18 each formed of a birefringent material. Each of the plane plates 16 and 18 is formed of the same material as that of the plane plate 14, and has a thickness $1/\sqrt{2}$ times the thickness of the plane plate 14.

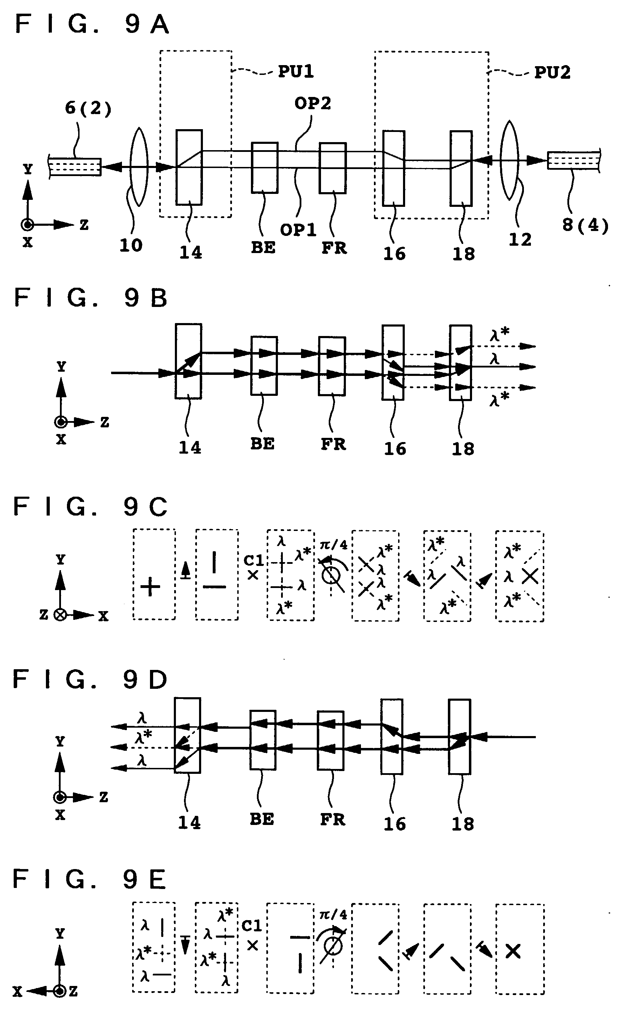

The operation of this optical isolator shown in FIG. 9A will now be described with reference to FIGS. 9B to 9E. FIG. 9B shows the propagation of light passing through each member of the optical isolator in the forward direction (the direction from the first port 2 toward the second port 4), FIG. 9C shows the operation of each member to the forward light and the polarization state of each beam, FIG. 9D shows the propagation of light passing through each member in the backward direction (the direction from the second port 4 toward the first port 2), and FIG. 9E shows the operation of each member to the backward light and the polarization state of each beam.

Each member shown in FIGS. 9B and 9D is viewed in the same direction as that shown in FIG. 9A. Each member shown in FIG. 9C is viewed in the forward direction, and each member shown in FIG. 9E is viewed in the backward direction. In each of FIGS. 9C and 9E, the line segments shown in each rectangular area surrounded by a broken line represent the polarization planes of the beams.

In this preferred embodiment, the positional relation between the members is set in accordance with the positional relation specified in FIG. 7B. The C1 axis of the birefringent element BE points in a direction determined by rotating the Y axis by $\pi/4$ counterclockwise as viewed in the forward direction, and the direction of Faraday rotation by the Faraday rotator FR is counterclockwise as viewed in the forward direction. Accordingly, the direction of Faraday rotation by the Faraday rotator FR as viewed in the backward direction is clockwise.

In each of FIGS. 9C and 9E, the arrow shown as corresponding to the plane plate 14 represents a direction of polarization separation in the plane plate 14 (the first polarization unit PU1), and the arrows shown as respectively corresponding to the plane plates 16 and 18 represent directions of polarization separation in the plane plates 16 and 18 (the second polarization unit PU2). The direction of polarization separation in the first polarization unit PU1 is parallel to the Y axis, and the direction of polarization separation in the second polarization unit PU2 is inclined by $\pi/4$ with respect to the Y axis.

In particular, the line segments shown by thin solid lines represent the polarization planes of the beams each having the first wavelength $\lambda$ ; the line segments shown by broken lines represent the polarization planes of the beams each having the second wavelength $\lambda^*$; and the line segments shown by thick solid lines represent the polarization planes of the beams each having the first and second wavelengths.

When each beam is passed through the birefringent element BE, the polarization plane of each beam is unchanged at the first wavelength $\lambda$ because the birefringent element BE functions as a full-wave plate at the first wavelength $\lambda$, whereas the polarization plane of each beam is rotated by $\pi/2$ at the second wavelength $\lambda^*$ because the birefringent element BE functions as a half-wave plate at the second wavelength $\lambda^*$.

The operation to the forward light will first be considered. In the first polarization unit PU1, the input light is separated into two beams of two linearly polarized light components having polarization planes orthogonal to each other. The two separate beams thus obtained enter the birefringent element BE in such a manner that the polarization plane of each beam is inclined by $\pi/4$ with respect to the optic axis of the birefringent element BE, and are passed through the birefringent element BE.

In the birefringent element BE, a retardation different according to wavelength is generated, so that the polarization state at the output of the birefringent element BE differs according to the wavelength of transmitted light.

The two beams output from the birefringent element BE are passed through the Faraday rotator FR, so that the polarization direction of each beam is rotated by $\pi/4$, thereafter entering the second polarization unit PU2. The second polarization unit PU2 is arranged so that the direction of polarization separation in each of the plane plates 16 and 18 coincides with one of the polarization directions of the two input beams. The output position of each input beam differs according to whether or not the polarization direction of each input beam coincides with the direction of polarization separation in each of the plane plates 16 and 18.

That is, the two separate beams obtained by the first polarization unit PU1 are focused at the same position or at different positions by the lens 12 according to wavelength. By making the beams focused at the same position enter the optical fiber 8, the optical isolator can transmit light with wavelength selectivity.

In paying attention to the beam having one of the two wavelengths and considering the operation of each member of this optical isolator, it is understood that this optical isolator is obtained by replacing the polarizers P1 and P2 of the optical isolator shown in FIG. 3 by the polarization units PU1 and PU2, respectively. That is, the angle formed between the direction of polarization separation in the polarization unit PU1 (corresponding to the transmission axis P1A of the polarizer P1) and the direction of polarization separation in the polarization unit PU2 (corresponding to the transmission axis P2A of the polarizer P2) is set to $\pi/4$; the angle formed between the direction of polarization separation in the polarization unit PU1 and the optic axis of the birefringent element BE is set to $\pi/4$; and the Faraday rotation angle is set to $(2n + 1)\pi/4$ (n is an integer). Accordingly, concerning the light propagating in the backward direction, this optical isolator has a wavelength characteristic of transmittance reverse to that for the light propagating in the forward direction as in FIGS. 6A and 6B.

Thus according to this preferred embodiment, it is possible to provide an optical isolator capable of performing reverse operations at at least two different wavelengths. Furthermore, since the first port 2 and the second port 4 are optically coupled by the optical paths OP1 and OP2 respectively related to two polarized light components having polarization planes orthogonal to each other, the power of output light can be maintained constant irrespective of the polarization state of input light, so that it is possible to provide a polarization-independent optical isolator.

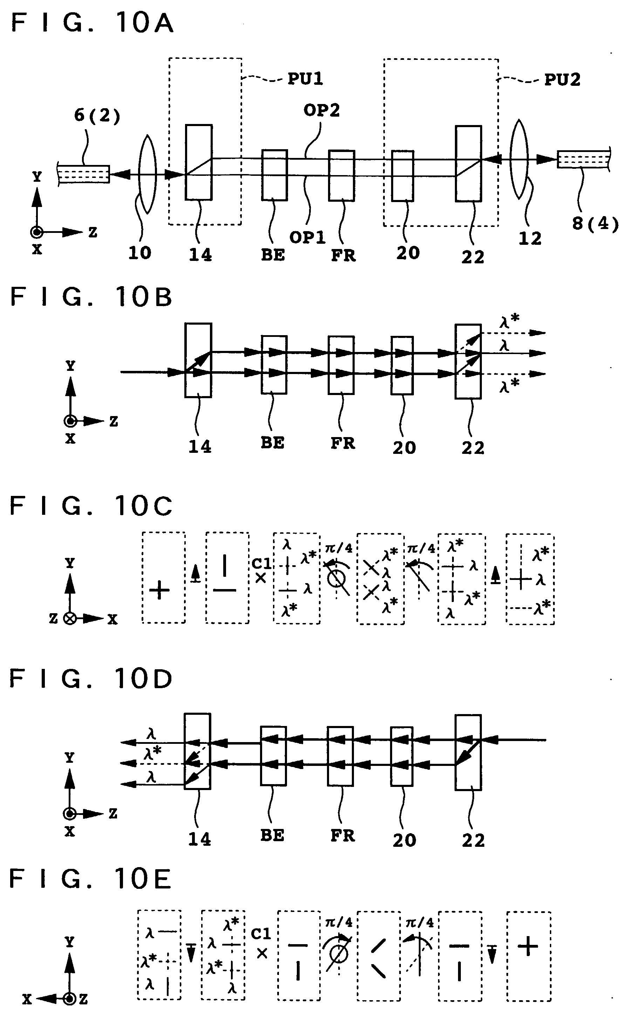

FIGS. 10A to 10E are schematic illustrations showing a second preferred embodiment of the optical isolator shown in FIG. 8. FIGS. 10A to 10E are to be viewed in the same manner as that of FIGS. 9A to 9E.

In contrast to the first preferred embodiment employing the second polarization unit PU2 shown in FIG. 9A, the second preferred embodiment is characterized in that a modified second polarization unit PU2 is used as shown in FIG. 10A. The modified second polarization unit PU2 in the second preferred embodiment includes a half-wave plate 20 acting on both the optical paths OP1 and OP2 and a plane plate 22 of a birefringent material provided between the half-wave plate 20 and the second port 4. The plane plate 22 is the same in material and thickness as the plane plate 14.

The half-wave plate 20 is arranged so that its optic axis is inclined by $\pi/8$, for example, with respect to the polarization direction of each incident beam. When each beam is passed through the half-wave plate 20, the polarization plane of each beam is rotated by $\pi/4$ counterclockwise as viewed in the propagation direction of the transmitted light.

In addition to the effect obtained by the first preferred embodiment, the second preferred embodiment can obtain another effect such that polarization dispersion is suppressed because the optical path lengths of the optical paths OP1 and OP2 are equal to each other.

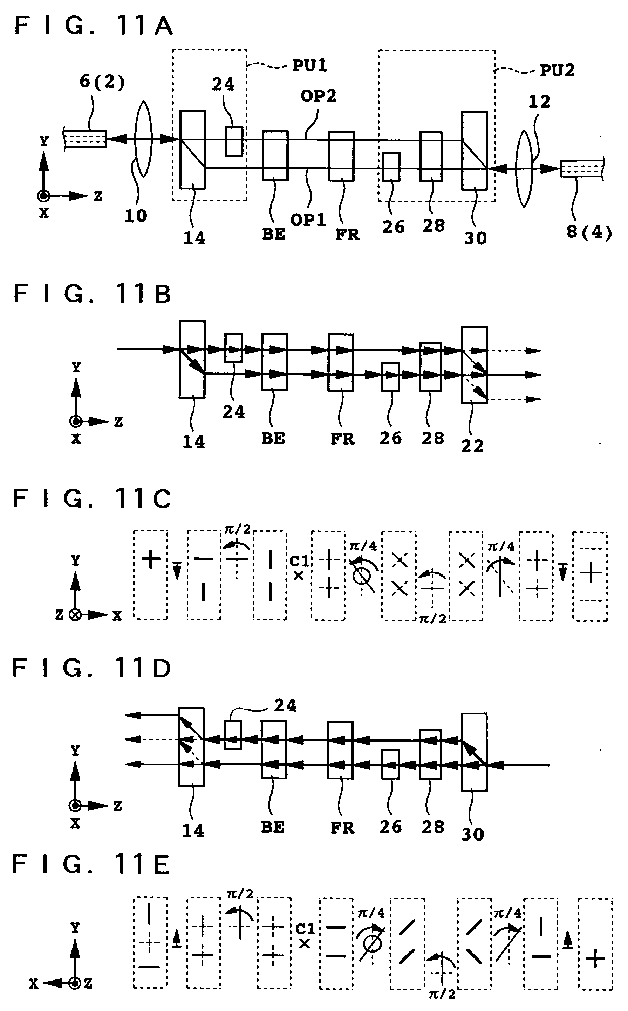

FIGS. 11A to 11E are schematic illustrations showing a third preferred embodiment of the optical isolator shown in FIG. 8. FIGS. 11A to 11E are to be viewed in the same manner as that of FIGS. 9A to 9E.

In contrast to the first preferred embodiment, the third preferred embodiment is characterized in that the polarization units PU1 and PU2 are modified.

In contrast to the polarization unit PU1 in the first preferred embodiment, the polarization unit PU1 in the third preferred embodiment further includes a half-wave plate 24 acting on one of the optical paths OP1 and OP2. In the case shown in FIG. 11A, the half-wave plate 24 is arranged so as to act on the optical path OP2.

The polarization unit PU2 in the third preferred embodiment includes a half-wave plate 26 acting on the other of the optical paths OP1 and OP2 not transmitted by the half-wave plate 24, a half-wave plate 28 acting on both the optical paths OP1 and OP2, and a plane plate 30 of a birefringent material provided between the half-wave plates 26 and 28 and the second port 4. In the case shown in FIG. 11A, the half-wave plate 26 is arranged so as to act on the optical path OP1. Although the half-wave plates 26 and 28 are arranged in this order in the forward direction as shown in FIG. 11A, they may be arranged in this order in the backward direction.

Each of the half-wave plates 24 and 26 has an optic axis inclined by $\pi/4$ with respect to the polarization direction of an input beam. When the beam is passed through each of the half-wave plates 24 and 26, the polarization plane of the beam is rotated by $\pi/2$.

The half-wave plate 28 has an optic axis inclined by $\pi/8$, for example, with respect to the polarization direction of each incident beam. When each beam is passed through the half-wave plate 28, the polarization plane of each beam is rotated by $\pi/4$ clockwise as viewed in the propagation direction of the transmitted beam.

In addition to the effect obtained by the first preferred embodiment, the third preferred embodiment can obtain another effect such that the two beams passing through the birefringent element BE are hardly affected by a temperature characteristic or the like of the birefringent element BE because the polarization directions of the two beams input to the birefringent element BE are made coincident with each other.

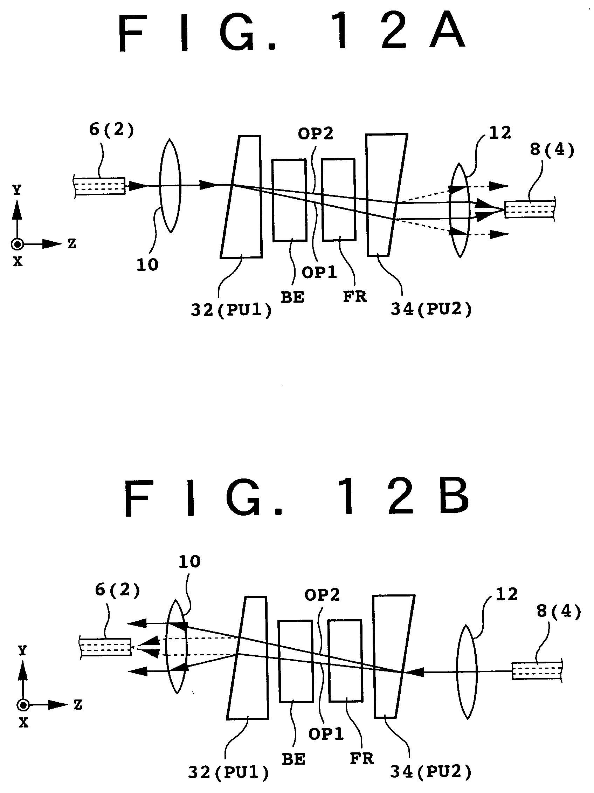

FIGS. 12A and 12B are schematic illustrations showing a fourth preferred embodiment of the optical isolator shown in FIG. 8. In the fourth preferred embodiment, the first polarization unit PU1 is provided by a first wedge plate 32 formed of a birefringent material, and the second polarization unit PU2 is provided by a second wedge plate 34 formed of a birefringent material. The wedge plates 32 and 34 have the same shape and have optic axes inclined by $\pi/4$ with

respect to each other, for example.

FIG. 12A shows propagation of light in the forward direction, and FIG. 12B shows propagation of light in the backward direction.

Also according to the fourth preferred embodiment, an effect similar to that obtained by the first preferred embodiment can be obtained. In particular, the fourth preferred embodiment can obtain an additional effect such that the longitudinal size of the optical isolator can be reduced. That is, in each of the first to third preferred embodiments, the function of the optical isolator is obtained by the positional shift of the beam passing through the birefringent plane plate, so that a converging system is required. To the contrary, in the fourth preferred embodiment, the function of the optical isolator is obtained by the angular shift of the beam passing through the birefringent wedge plate, so that a collimating system can be adopted to thereby allow a reduction in distance between the lenses 10 and 12 or allow widening of a tolerance of distance between the lenses 10 and 12.

Additional detailed information on the configuration and operation of the members excepting the birefringent element BE in the fourth preferred embodiment is described in Japanese Patent Publication No. 61-58809 or U.S. Patent No. 4,548,478.

The optical isolator shown in FIG. 8 can be used as a component of an optical amplifier. The optical amplifier includes the optical isolator shown in FIG. 8, an optical amplifying medium connected to the first port 2, and means connected to the second port 4 for optically pumping the optical amplifying medium. For example, the optical amplifying medium is provided by an erbium doped fiber, and the pumping means includes a pumping source for outputting pump light having a 0.98 μm band (0.97 μm - 0.99 μm) or a 1.48 μm band (1.47 μm - 1.49 μm). In this case, a gain band (a band where gain is produced) including a wavelength of 1.55 μm.

By applying the optical isolator according to the present invention to such an optical amplifier, the optical isolator can perform reverse operations to pump light and signal light different in wavelength from each other.

Various preferred embodiments of the optical amplifier according to the present invention will now be described.

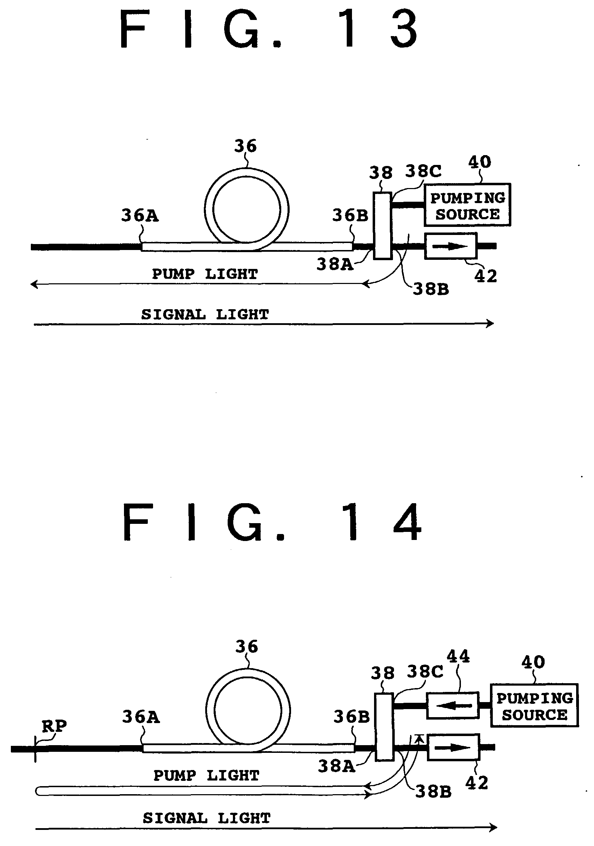

Referring to FIG. 13, there is shown a conventional optical amplifier including an optical isolator. An erbium doped fiber (EDF) 36 having a first end 36A and a second end 36B is used as the optical amplifying medium. In the preferred embodiments to be hereinafter described, the optical amplifying medium is not limited to an EDF, but an optical fiber doped with any one of the other rare earth elements such as neodymium (Nd) and ytterbium (Yb) may be adopted.

Signal light to be amplified is supplied to the first end 36A of the EDF 36, and pump light is supplied from a pumping source 40 through a WDM (wavelength division multiplexing) coupler 38 to the second end 36B of the EDF 36.

The WDM coupler 38 has three ports 38A, 38B, and 38C. The port 38A is optically connected to the second end 36B of the EDF 36, the port 38B is optically connected to an optical isolator 42, and the port 38C is optically connected to the pumping source 40.

A laser diode may be used as the pumping source 40.

In the WDM coupler 38, the ports 38A and 38B are coupled to each other by the wavelength of the signal light, and the ports 38A and 38C are coupled to each other by the wavelength of the pump light. Such a specific function of the WDM coupler 38 can be obtained by suitably setting structural parameters of spliced portions in a fiber splicing type optical coupler, for example.

When the signal light to be amplified is supplied to the EDF 36 being pumped by the pump light, the signal light is amplified in the EDF 36, and the amplified signal light is passed through the optical isolator 42 and then output from this optical amplifier.

The reason for use of the optical isolator 42 in the optical amplifier shown in FIG. 13 is that if the optical isolator 42 is not used, an optical resonator structure including the EDF 36 as the optical amplifying medium would be formed to cause a possibility of undesired operation such as oscillation.

Referring to FIG. 14, there is shown an improvement of the optical amplifier shown in FIG. 13. In this example, an additional optical isolator 44 for the pumping source 40 is optically connected between the pumping source 40 and the port 38C of the WDM coupler 38.

The reason for use of the optical isolator 44 is that when a reflection point RP is present in an optical transmission line upstream of the EDF 36 in the propagation direction of the signal light, an adverse effect of the pump light reflected at the reflection point RP is intended to be avoided. More specifically, when a remaining part of the pump light left in the EDF 36 after amplification therein is output from the first end 36A of the EDF 36 in a direction opposite to the propagation direction of the signal light, the output pump light is reflected at the reflection point RP and then passed through the EDF 36 in the same direction as the propagation direction of the signal light. If the optical isolator 44 is absent, the reflected pump light would be fed back to the pumping source 40 through the WDM coupler 38. In this example shown, the optical isolator 44 is provided to block such feedback of the reflected pump light to the pumping source 40, thereby ensuring a stable operation of the pumping source 40.

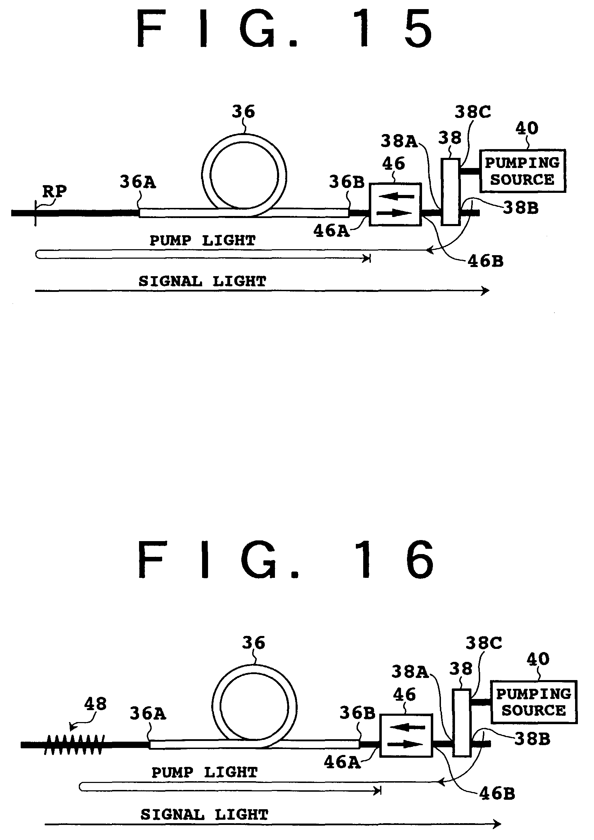

FIG. 15 shows a first preferred embodiment of the optical amplifier according to the present invention. This optical amplifier includes an optical isolator 46 having wavelength selectivity according to the present invention. The optical isolator 46 has a port 46A optically connected to the second end 36B of the EDF 36 and a port 46B optically connected to the port 38A of the WDM coupler 38. The ports 46A and 46B respectively correspond to the ports 2 and 4 shown in FIG. 8, for example.

Since the optical isolator 46 has wavelength selectivity, the optical isolator 46 passes the signal light and blocks the pump light in a direction from the port 46A toward the port 46B, whereas passed the pump light and blocks the signal light in a direction from the port 46B toward the port 46A.

The pump light from the pumping source 40 is passed through the ports 38C and 38A of the WDM coupler 38 and the optical isolator 46 in this order, and supplied into the EDF 36 from its second end 36B. When the signal light to be amplified is supplied from the first end 36A into the EDF 36 being pumped by the pump light, the signal light is amplified in the EDF 36, and the amplified signal light is passed through the optical isolator 46 and the ports 38A and 38B of the WDM coupler 38 in this order and then output from this optical amplifier.

According to this preferred embodiment, the optical isolator 46 acts on the signal light in the same manner as that of the optical isolator 42 shown in FIG. 14, thereby eliminating the possibility of undesired operation such as oscillation. Further, the optical isolator 46 acts also on the pump light in the same manner as that of the optical isolator 44 shown in FIG. 14, thereby preventing the feedback of the remaining pump light reflected at the reflection point RP to the pumping source 40 and accordingly eliminating the possibility of an unstable operation of the pumping source 40.

Thus, this preferred embodiment has an advantage such that the optical isolator having wavelength selectivity according to the present invention has the functions of the two optical isolators 42 and 44 shown in FIG. 14, thereby allowing a reduction in size and a simplification in configuration of the optical amplifier.

FIG. 16 shows a second preferred embodiment of the optical amplifier according to the present invention. In contrast to the first preferred embodiment shown in FIG. 15, the second preferred embodiment shown in FIG. 16 is characterized in that a reflector 48 for positively reflecting the pump light is optically connected to the first end 36A of the EDF 36. The reflector 48 has a reflection band including the wavelength of the pump light.

By using the reflector 48, the pump light can be reciprocated in the EDF 36 to thereby increase a pumping efficiency. As a result, a gain per unit power of the pump light can be increased.

A fiber grating is suitable for the reflector 48. By suitably setting the grating pitch of the fiber grating, it is possible to easily provide a reflector having a high reflectance for the pump light and a low reflectance for the signal light.

This preferred embodiment also includes the optical isolator 46 having wavelength selectivity according to the present invention, so that the optical amplifier can be simplified in configuration and reduced in size on the same principle as that of the first preferred embodiment shown in FIG. 15. Moreover, the optical amplifier can be improved in performance by use of the reflector 48.

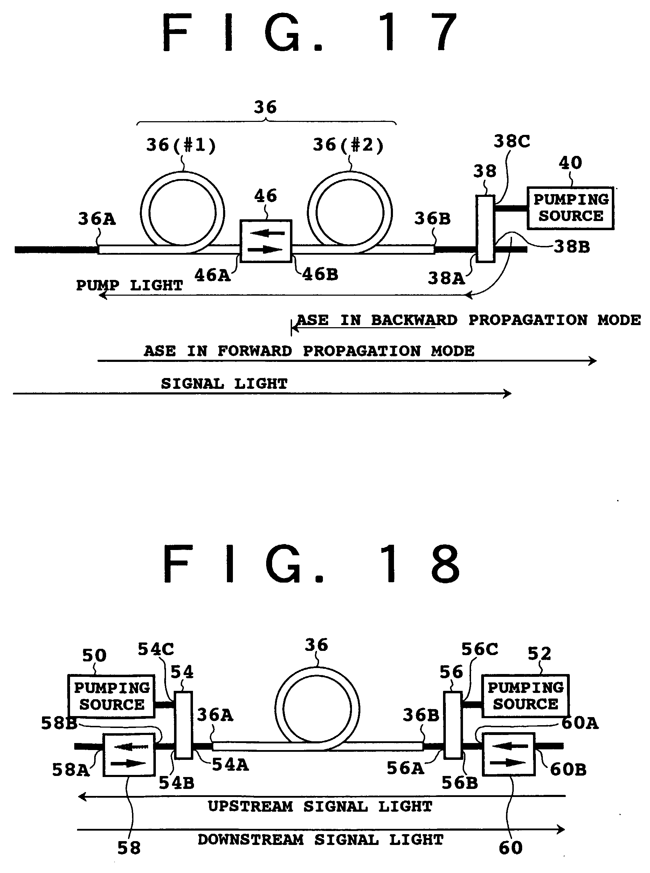

FIG. 17 shows a third preferred embodiment of the optical amplifier according to the present invention. In this preferred embodiment, a first EDF 36(#1) and a second EDF 36(#2) are used as the EDF 36, and the optical isolator 46 having wavelength selectivity according to the present invention is provided between the first and second EDFs 36(#1) and 36(#2).

One end of the EDF 36(#1) as the first end 36A of the EDF 36 is supplied with the signal light to be amplified, and the other end of the EDF 36(#1) is optically connected to the port 46A of the optical isolator 46. One end of the EDF 36(#2) is optically connected to the port 46B of the optical isolator 46, and the other end of the EDF 36(#2) as the second end 36B of the EDF 36 is optically connected to the port 38A of the WDM coupler 38. The port 38C of the WDM coupler 38 is optically connected to the pumping source 40.

The pump light from the pumping source 40 is supplied through the WDM coupler 38 to the EDF 36(#2), in which the pump light is used to pump the EDF 36(#2). Thereafter, a remaining part of the pump light is supplied through the optical isolator 46 to the EDF 36(#1), thereby pumping the EDF 36(#1).

When the signal light to be amplified is supplied to the first end 36A, the signal light is amplified in the EDF 36(#1), and the amplified signal light is supplied through the optical isolator 46 to the EDF 36(#2). Thereafter, the amplified signal light supplied to the EDF 36(#2) is further amplified in the EDF 36(#2), and the further amplified signal light is passed through the ports 38A and 38B of the WDM coupler 38 in this order and then output from this optical amplifier.

In each of the EDFs 36(#1) and 36(#2), there are generated ASE (amplified spontaneous emission) in the forward propagation mode of the same direction as the propagation direction of the signal light and ASE in the backward propagation mode of the direction opposite to the propagation direction of the signal light. According to this preferred embodiment, a component of the ASE in the backward propagation mode falling especially in a band near the wavelength of the signal light can be effectively blocked by the optical isolator 46, so that it is possible to provide an optical amplifier having a small noise figure.

If the conventional optical isolator is used in place of the optical isolator 46, the following problem would occur. In the case that the conventional optical isolator is provided so that the loss in the propagation direction of the signal light is reduced, the pump light is blocked by this optical isolator and not supplied to the EDF 36(#1), so that no gain is produced in the EDF 36(#1). Conversely, in the case that the conventional optical isolator is provided so that the loss in the direction opposite to the propagation direction of the signal light is reduced, the signal light amplified in the EDF 36(#1) is blocked by this optical isolator, so that this optical amplifier does not properly function. In this manner, providing the conventional optical isolator between the EDFs 36(#1) and 36(#2) has no effect, but it is rather harmful.

To the contrary, the third preferred embodiment shown in FIG. 17 can obtain the above-mentioned effect by providing the optical isolator 46 having wavelength selectivity according to the present invention between the EDFs 36(#1) and 36(#2), so that it is possible to provide a high-performance optical amplifier.

FIG. 18 shows a fourth preferred embodiment of the optical amplifier according to the present invention. This optical amplifier can be applied to bidirectional transmission using downstream signal light and upstream signal light having a wavelength different from the wavelength of the downstream signal light.

For the purpose of well-balanced amplification of the downstream signal light and the upstream signal light by means of the EDF 36, the means for pumping the EDF 36 in this preferred embodiment includes pumping sources 50 and 52 and WDM couplers 54 and 56.

The WDM coupler 54 has ports 54A, 54B, and 54C. The port 54A is optically connected to the first end 36A of the EDF 36, and the port 54C is optically connected to the pumping source 50.

In the WDM coupler 54, the ports 54A and 54B are coupled by each of the wavelength of the downstream signal light and the wavelength of the upstream signal light, and the ports 54A and 54C are coupled by the wavelength of the pump light output from the pumping source 50.

The WDM coupler 56 has ports 56A, 56B, and 56C. The port 56A is optically connected to the second end 36B of the EDF 36, and the port 56C is optically connected to the pumping source 52.

The ports 56A and 56B are coupled by each of the wavelength of the downstream signal light and the wavelength of the upstream signal light, and the ports 56A and 56C are coupled by the wavelength of the pump light output from the pumping source 52.

Reference numeral 58 denotes an optical isolator having wavelength selectivity according to the present invention. The optical isolator 58 optically couples ports 58A and 58B. The ports 58A and 58B respectively correspond to the ports 2 and 4 shown in FIG. 8, for example.

Owing to the wavelength selectivity of the optical isolator 58, it passes the downstream signal light and blocks light having the same wavelength as that of the upstream signal light in the direction from the port 58A toward the port 58B, whereas passes the upstream signal light and blocks light having the same wavelength as that of the downstream signal light in the direction from the port 58B toward the port 58A.

The port 58B of the optical isolator 58 is operatively connected to the first end 36A of the EDF 36. (In this specification, the wording that an element and another element are operatively connected includes the case that these elements are directly connected, and also includes the case that these elements are so provided as to be related with each other to such an extent that an electrical signal or an optical signal can be mutually transferred between these elements.) In this preferred embodiment, the port 58B is optically connected to the port 54B of the WDM coupler 54.

Reference numeral 60 denotes another optical isolator having wavelength selectivity according to the present invention. The optical isolator 60 optically couples ports 60A and 60B. The ports 60A and 60B respectively correspond to the ports 2 and 4 shown in FIG. 8, for example.

Owing to the wavelength selectivity of the optical isolator 60, it passes the downstream signal light and blocks light having the same wavelength as that of the upstream signal light in the direction from the port 60A toward the port 60B, whereas passes the upstream signal light and blocks light having the same wavelength as that of the downstream signal light in the direction from the port 60B toward the port 60A.

The port 60A of the optical isolator 60 is operatively connected to the second end 36B of the EDF 36. In this preferred embodiment, the port 60A is optically connected to the port 56B of the WDM coupler 56.

The downstream signal light to be amplified is supplied to the port 58A of the optical isolator 58. The downstream signal light is then passed through the optical isolator 58 and the WDM coupler 54 in this order and supplied to the EDF 36. The downstream signal light amplified in the EDF 36 is then passed through the WDM coupler 56 and the optical isolator 60 in this order and output from this optical amplifier.

The upstream signal light to be amplified is supplied to the port 60B of the optical isolator 60. The upstream signal light is then passed through the optical isolator 60 and the WDM coupler 56 in this order and supplied to the EDF 36. The upstream signal amplified in the EDF 36 is then passed through the WDM coupler 54 and the optical isolator 58 in this order and output from this optical amplifier.

According to this preferred embodiment, the optical isolators 58 and 60 each having wavelength selectivity are used to thereby prevent oscillation due to reflection feedback of the upstream signal light and also prevent oscillation due to reflection feedback of the downstream signal light.

If the conventional optical isolators each having no wavelength selectivity are applied to bidirectional transmission in place of the optical isolators 58 and 60, any one of the upstream signal light and the downstream signal light would be blocked. To the contrary, the fourth preferred embodiment shown in FIG. 18 employs the optical isolators 58 and 60 each having wavelength selectivity according to the present invention, so that it is possible to provide an optical amplifier applicable to bidirectional transmission.

While this preferred embodiment employs the two optical isolators 58 and 60 according to the present invention, any one of the two optical isolators 58 and 60 may be omitted.

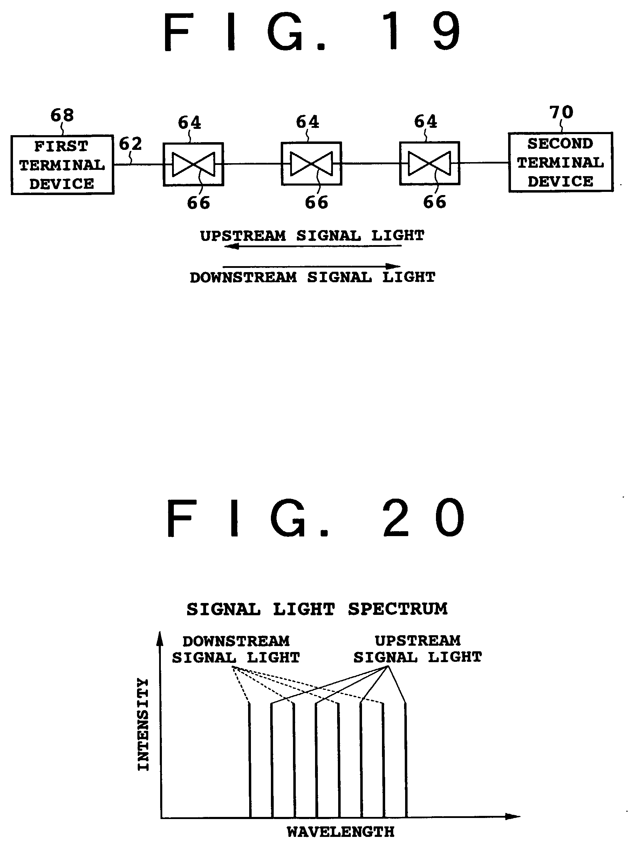

FIG. 19 shows a preferred embodiment of the system according to the present invention. This system includes an optical fiber transmission line 62 and a plurality of optical repeaters 64 arranged along the optical fiber transmission line 62. Each of the optical repeaters 64 includes the optical amplifier according to the present invention, e.g., the optical amplifier shown in FIG. 18. A single optical repeater may be provided in place of the plural optical repeaters 64.

A first terminal device 68 is connected to one end of the optical fiber transmission line 62, and a second terminal device 70 is connected to the other end of the optical fiber transmission line 62.

The first terminal device 68 includes an optical transmitter for launching downstream signal light into the optical fiber transmission line 62, and the second terminal device 70 includes an optical transmitter for launching upstream signal light into the optical fiber transmission line 62. The first terminal device 68 further includes an optical receiver for receiving the upstream signal light transmitted by the optical fiber transmission line 62, and the second terminal device 70 further includes an optical receiver for receiving the downstream signal light transmitted by the optical fiber transmission line 62.

With this configuration, bidirectional transmission can be made on the principle described in the fourth preferred embodiment of the optical amplifier shown in FIG. 18. Furthermore, unstable operation due to oscillation or the like in each optical amplifier 66 can be prevented.

Each of the downstream signal light and the upstream signal light may be WDM signal light obtained by wavelength division multiplexing a plurality of optical signals having different wavelengths. In this case, it is preferable to arrange the plural optical signals of the downstream signal light and the plural optical signals of the upstream signal light alternately at substantially equal intervals along a wavelength axis as shown in FIG. 20, for example. This is due to the fact that the operation characteristic of the optical isolator according to the present invention has periodicity as shown in FIGS. 6A and 6B, and the above-mentioned operation in the fourth preferred embodiment of the optical amplifier shown in FIG. 18 can therefore be easily ensured by adapting this periodicity to the arrangement of the signal light spectrum shown in FIG. 20.

By adopting the arrangement of the signal light spectrum shown in FIG. 20, the wavelength spacing of each of the downstream signal light and the upstream signal light can be made relatively wide. Accordingly, wavelength (frequency) discrimination of the optical signals upon receiving can be easily performed, and undesired nonlinear effects such as four-wave mixing (FWM) and cross-phase modulation (XPM) can be suppressed.

According to the present invention as described above, it is possible to provide an optical device usable as an optical isolator having wavelength selectivity. Further, it is also possible to provide a novel high-quality optical amplifier and system by using the optical device according to the present invention. The other effects obtained by the specific preferred embodiments of the present invention have been described above, so the description thereof will be omitted herein.

The present invention is not limited to the details of the above described preferred embodiments. The scope of the invention is defined by the appended claims and all changes and modifications as fall within the equivalence of the scope of the claims are therefore to be embraced by the invention.

**Claims**

1. An optical device for optically coupling a first port and a second port, comprising:

   a first polarization unit for coupling said first port to a first optical path related to a first polarized light component having a first polarization plane and to a second optical path related to a second polarized light component having a second polarization plane perpendicular to said first polarization plane;
   a second polarization unit for coupling said second port to said first and second optical paths;
   a birefringent element provided between said first and second polarization units, said birefringent element functioning as a full-wave plate for each of said first and second polarized light components at a first wavelength and as a half-wave plate for each of said first and second polarized light components at a second wavelength different from said first wavelength; and
   a Faraday rotator provided between said first and second polarization units for giving a Faraday rotation angle of $(2n + 1)\pi/4$ (n is an integer) to each of said first and second polarized light components.

2. An optical device according to claim 1, wherein:

   a beam having said first wavelength from said first port follows said first and second optical paths and is supplied entirely in principle to said second port;

a beam having said first wavelength from said second port is deviated from said first and second optical paths and not supplied to said first port;

a beam having said second wavelength from said second port follows said first and second optical paths and is supplied entirely in principle to said first port; and

a beam having said second wavelength from said first port is deviated from said first and second optical paths and not supplied to said second port.

3. An optical device according to claim 1, wherein said first polarization unit comprises a first plane plate formed of a birefringent material.

4. An optical device according to claim 3, wherein said second polarization unit comprises second and third plane plates each formed of a birefringent material, each of said second and third plane plates having a thickness $1/\sqrt{2}$ times the thickness of said first plane plate.

5. An optical device according to claim 3, wherein:

said second polarization unit comprises a half-wave plate acting on both said first and second polarized light components, and a second plane plate formed of a birefringent material and provided between said half-wave plate and said second port;
said second plane plate having a thickness equal to the thickness of said first plane plate.

6. An optical device according to claim 3, wherein:

said first polarization unit further comprises a first half-wave plate acting on one of said first and second polarized light components;
said second polarization unit comprises a second half-wave plate acting on the other of said first and second polarized light components, a third half-wave plate acting on both said first and second polarized light components, and a second plane plate formed of a birefringent material and provided between said second and third half-wave plates and said second port;
said second plane plate having a thickness equal to the thickness of said first plane plate.

7. An optical device according to claim 1, wherein:

said first polarization unit comprises a first wedge plate formed of a birefringent material; and
said second polarization unit comprises a second wedge plate formed of a birefringent material.

8. An optical device according to claim 1, wherein said first and second ports are provided by first and second optical fibers, respectively.

9. An optical device according to claim 8, further comprising:

a first lens provided between said first optical fiber and said first polarization unit; and
a second lens provided between said second optical fiber and said second polarization unit.

10. An optical device according to claim 1, further comprising:

an optical amplifying medium connected to said first port; and
means connected to said second port for optically pumping said optical amplifying medium.

11. An optical device according to claim 10, wherein:

said optical amplifying medium comprises an erbium doped fiber; and
said pumping means comprises a pumping source for outputting pump light having a 0.98 μm band or a 1.48 μm band.

12. An optical device comprising:

first and second polarizers each having a transmission axis determining a polarization axis of polarized light passing therethrough;

a birefringent element provided between said first and second polarizers and having an optic axis determining a phase difference between two orthogonal polarized light components of polarized light passing therethrough; and

a Faraday rotator provided between said first and second polarizers for giving a Faraday rotation angle of $(2n + 1)\pi/4$ (n is an integer) to polarized lightpassing therethrough;

an angle formed between said transmission axis of said first polarizer and said transmission axis of said second polarizer being $\pi/4$;

an angle formed between said transmission axis of said first polarizer and said optic axis of said birefringent element being $\pi/4$.

13. An optical device according to claim 12, wherein said birefringent element has a thickness set so that said birefringent element functions as a full-wave plate for a first wavelength and as a half-wave plate for a second wavelength different from said first wavelength.

14. An optical amplifier comprising:

an optical device having first and second ports, said optical device passing light having a first wavelength and blocking light having a second wavelength different from said first wavelength in a direction from said first port toward said second port, whereas passing light having said second wavelength and blocking light having said first wavelength in a direction from said second port toward said first port;

an optical amplifying medium having a first end and a second end, said first end being supplied with signal light having said first wavelength, said second end being optically connected to said first port;

a WDM coupler having third, fourth, and fifth ports, said third port being optically connected to said second port, said third and fourth ports being coupled by said first wavelength, said third and fifth ports being coupled by said second wavelength; and

a pumping source optically connected to said fifth port for outputting pump light having a wavelength determined so that said optical amplifying medium provides a gain band including said first wavelength;

said wavelength of said pump light being substantially equal to said second wavelength.

15. An optical amplifier according to claim 14, wherein:

said optical amplifying medium comprises an erbium doped fiber;

said first wavelength is included in a 1.55 μm band; and

said second wavelength is included in a 0,98 μm band or a 1.48 μm band.

16. An optical amplifier according to claim 14, further comprising a reflector optically connected to said first end of said optical amplifying medium, said reflector having a reflection band including said second wavelength.

17. An optical amplifier according to claim 16, wherein said reflector comprises a fiber grating.

18. An optical amplifier according to claim 14, wherein said optical device comprises:

a first polarization unit for coupling said first port to a first optical path related to a first polarized light component having a first polarization plane and to a second optical path related to a second polarized light component having a second polarization plane perpendicular to said first polarization plane;

a second polarization unit for coupling said second port to said first and second optical paths;

a birefringent element provided between said first and second polarization units, said birefringent element functioning as a full-wave plate for each of said first and second polarized light components at said first wavelength and as a half-wave plate for each of said first and second polarized light components at said second wavelength; and

a Faraday rotator provided between said first and second polarization units for giving a Faraday rotation angle of $(2n + 1)\pi/4$ (n is an integer) to each of said first and second polarized light components.

19. An optical amplifier comprising:

an optical device having first and second ports, said optical device passing light having a first wavelength and blocking light having a second wavelength different from said first wavelength in a direction from said first port toward said second port, whereas passing light having said second wavelength and blocking light having said first wavelength in a direction from said second port toward said first port;

a first optical amplifying medium having a first end and a second end, said first end being supplied with signal light having said first wavelength, said second end being optically connected to said first port;

a second optical amplifying medium having a third end and a fourth end, said third end being optically connected to said second port;

a WDM coupler having third, fourth, and fifth ports, said third port being optically connected to said fourth end, said third and fourth ports being coupled by said first wavelength, said third and fifth ports being coupled by said second wavelength; and

a pumping source optically connected to said fifth port for outputting pump light having a wavelength determined so that each of said first and second optical amplifying media provides a gain band including said first wavelength;

said wavelength of said pump light being substantially equal to said second wavelength.

**20.** An optical amplifier according to claim 19, wherein:

each of said first and second optical amplifying media comprises an erbium doped fiber;
said first wavelength is included in a 1.55 µm band; and
said second wavelength is included in a 0.98 µm band or a 1.48 µm band.

**21.** An optical amplifier according to claim 19, wherein

said optical device comprises:
a first polarization unit for coupling said first port to a first optical path related to a first polarized light component having a first polarization plane and to a second optical path related to a second polarized light component having a second polarization plane perpendicular to said first polarization plane;
a second polarization unit for coupling said second port to said first and second optical paths;
a birefringent element provided between said first and second polarization units, said birefringent element functioning as a full-wave plate for each of said first and second polarized light components at said first wavelength and as a half-wave plate for each of said first and second polarized light components at said second wavelength; and
a Faraday rotator provided between said first and second polarization units for giving a Faraday rotation angle of $(2n + 1)\pi/4$ (n is an integer) to each of said first and second polarized light components.

**22.** An optical amplifier comprising:

an optical amplifying medium having a first end and a second end;
an optical device having first and second ports, said second port being operatively connected to said first end, said optical device passing light having a first wavelength and blocking light having a second wavelength different from said first wavelength in a direction from said first port toward said second port, whereas passing light having said second wavelength and blocking light having said first wavelength in a direction from said second port toward said first port; and
means for pumping said optical amplifying medium so that said optical amplifying medium provides a gain band including said first and second wavelengths.

**23.** An optical amplifier according to claim 22, wherein:

said first port of said optical device is supplied with first signal light to be amplified, said first signal light having said first wavelength; and
said second end of said optical amplifying medium is supplied with second signal light to be amplified, said second signal light having said second wavelength.

**24.** An optical amplifier according to claim 22, further comprising a second optical device having third and fourth ports, said third port being operatively connected to said second end of said optical amplifying medium, said second optical device passing light having said first wavelength and blocking light having said second wavelength in a direction from said third port toward said fourth port, whereas passing light having said second wavelength and blocking light having said first wavelength in a direction from said fourth port toward said third port.

**25.** An optical amplifier according to claim 22, wherein:

said optical amplifying medium comprises an erbium doped fiber;
said pumping means comprises a pumping source for outputting pump light having a wavelength included in a 0.98 μm band or a 1.48 μm band; and
said first and second wavelengths are included in a 1.55 μm band.

**26.** An optical amplifier according to claim 22, wherein said optical device comprises:

a first polarization unit for coupling said first port to a first optical path related to a first polarized light component having a first polarization plane and to a second optical path related to a second polarized light component having a second polarization plane perpendicular to said first polarization plane;
a second polarization unit for coupling said second port to said first and second optical paths;
a birefringent element provided between said first and second polarization units, said birefringent element functioning as a full-wave plate for each of said first and second polarized light components at said first wavelength and as a half-wave plate for each of said first and second polarized light components at said second wavelength; and
a Faraday rotator provided between said first and second polarization units for giving a Faraday rotation angle of $(2n + 1)\pi/4$ (n is an integer) to each of said first and second polarized light components.

**27.** A system comprising:

an optical fiber transmission line; and
at least one optical repeater arranged along said optical fiber transmission line;
each of said at least one optical repeater comprising:
an optical amplifying medium having a first end and a second end;
an optical device having first and second ports, said second port being operatively connected to said first end, said optical device passing light having a first wavelength and blocking light having a second wavelength different from said first wavelength in a direction from said first port toward said second port, whereas passing light having said second wavelength and blocking light having said first wavelength in a direction from said second port toward said first port; and
means for pumping said optical amplifying medium so that said optical amplifying medium provides a gain band including said first and second wavelengths.

**28.** A system according to claim 27, further comprising:

a first terminal device for supplying first signal light to one end of said optical fiber transmission line so that said first signal light is passed through said optical repeater; and
a second terminal device for supplying second signal light to the other end of said optical fiber transmission line so that said second signal light is passed through said optical repeater.

**29.** A system according to claim 28, wherein each of said first and second signal lights is WDM signal light obtained by wavelength division multiplexing a plurality of optical signals having different wavelengths.

**30.** A system according to claim 29, wherein said plurality of optical signals of said first signal light and said plurality of optical signals of said second signal light are arranged alternately at substantially equal intervals along a wavelength axis.

**31.** An optical device comprising;

a first optical device separating a light into a plurality of polarized light,
a second optical device combining the plurality of polarized light from the first optical device,
a Faraday rotator arranging between the first optical device and the second optical device and rotating the plurality of polarized light of polarization, and
a birefringent element arranging between the first optical device and the second optical device and distinguishing refractive index of polarization direction.

# F I G. 1

P2;SECOND POLARIZER

P1;FIRST POLARIZER

Y(C2)

X(C1) → Z

OP

BE;BIREFRINGENT ELEMENT

# F I G. 2

P2;SECOND POLARIZER

P1;FIRST POLARIZER

2

4

OP

FR;FARADAY ROTATOR

# F I G. 3

P2;SECOND POLARIZER

P1;FIRST POLARIZER

Y

Z

X

2

OP

BE;
BIREFRINGENT
ELEMENT

FR;
FARADAY ROTATOR

4

# F I G. 4 A

**C2 AXIS**

P1A

$\theta$

$\phi$

P2A

$\alpha$

Z ⊗ C1 AXIS

# F I G. 4 B

**C2 AXIS**

P1A

$-\theta$

$-\phi$

P2A

$\alpha$

C1 AXIS ← ⊙ Z

# F I G.  5

$1/\lambda = a\lambda + b$
$a = -4.165 \times 10^{-7}$
$b = 1.291 \times 10^{-3}$

1/λ (1/nm)

WAVELENGTH   λ (nm)

EP 0 982 620 A2

# FIG. 6A

# FIG. 6B

# F I G. 7A

# F I G. 7B

# F I G. 8

FIG. 9A

FIG. 9B

FIG. 9C

FIG. 9D

FIG. 9E

F I G. 10A

F I G. 10B

F I G. 10C

F I G. 10D

F I G. 10E

# F I G. 11A

# F I G. 11B

# F I G. 11C

# F I G. 11D

# F I G. 11E

# F I G. 1 2 A

6(2)　　　　　　OP2　　　　　12　　8(4)

Y
X　Z

10

32(PU1)　BE　OP1　FR　34(PU2)

# F I G. 1 2 B

10

6(2)　　　OP2　　　12　8(4)

Y
X　Z

32(PU1)　BE　OP1　FR　34(PU2)

# FIG. 13

# FIG. 14

# F I G. 1 5

# F I G. 1 6

# F I G. 1 7

PUMP LIGHT

ASE IN BACKWARD PROPAGATION MODE

ASE IN FORWARD PROPAGATION MODE

SIGNAL LIGHT

# F I G. 1 8

UPSTREAM SIGNAL LIGHT

DOWNSTREAM SIGNAL LIGHT

# F I G. 1 9

FIRST TERMINAL DEVICE **68**
**62**
**64**
**64**
**64**
SECOND TERMINAL DEVICE **70**
**66**
**66**
**66**

UPSTREAM SIGNAL LIGHT

DOWNSTREAM SIGNAL LIGHT

# F I G. 2 0

SIGNAL LIGHT SPECTRUM

DOWNSTREAM SIGNAL LIGHT

UPSTREAM SIGNAL LIGHT

INTENSITY

WAVELENGTH